# EUROPÄISCHE PATENTSCHRIFT

(11) **EP 3 598 079 B1**
(45) Veröffentlichungstag und Bekanntmachung des Hinweises auf die Patenterteilung: **27.04.2022**
(21) Anmeldenummer: 18184802.9
(22) Anmeldetag: 20.07.2018
(51) Int. Cl.: G01F 1/00, G01F 23/00, G05B 19/042, G01F 25/00

(54) **BATTERIEBETRIEBENES FELDGERÄT MIT ENERGIEMANAGEMENT**
BATTERY-OPERATED FIELD DEVICE WITH ENERGY MANAGEMENT
APPAREIL DE TERRAIN ENTRAÎNÉ PAR BATTERIE À GESTION D'ÉNERGIE

(43) Veröffentlichungstag der Anmeldung: 22.01.2020
(73) Patentinhaber: VEGA Grieshaber KG, 77709 Wolfach (DE)
(72) Erfinder: WÄLDE, Steffen, 78078 Niedereschach (DE); BÖRSIG, Jörg, 77776 Schapbach (DE)
(74) Vertreter: Maiwald Patent- und Rechtsanwaltsgesellschaft mbH

(56) Entgegenhaltungen:
- EP-A1- 2 256 566
- EP-A1- 2 667 162
- EP-A1- 3 279 619
- EP-B1- 2 256 566
- EP-B1- 2 667 162
- WO-A1-2014/083340
- GB-A- 2 271 691
- KR-B1- 101 862 143
- US-B1- 7 321 774

## Beschreibung

### Gebiet der Erfindung

Die Erfindung betrifft batteriebetriebene Feldgeräte, insbesondere Feldgeräte zur Füllstandmessung, zur Grenzstandbestimmung, zur Erfassung der Topologie einer Füllgutoberfläche oder zur Anzeige der Messwerte dieser Geräte. Beispiele für derartige Geräte sind ein Impedanzgrenzschalter, ein Vibrationsgrenzschalter, ein Füllstandradar bzw. ein Radarfüllstandmessgerät oder eine Anzeige-Vorrichtung. Weiter betrifft die Erfindung eine Verwendung des Feldgeräts.

### Hintergrund

Zur Füllstandmessung, beispielsweise in einem Behälter, werden verschiedene Arten von Sensorsystemen eingesetzt. Einige dieser Sensor- oder Anzeigesysteme sind als autarke Feldgeräte ausgeführt, d.h. diese Geräte werden unabhängig von einem Stromnetz eingesetzt und sind daher auf eine Batterie oder Ähnliches angewiesen. Einige Ausführungsformen sind verkapselt, z.B. aus Gründen des Korrosionsschutzes, so dass das Auswechseln der Batterie aufwändig sein kann. Es ist daher wichtig, diese Feldgeräte energiesparend zu betreiben, so dass diese möglichst lange ohne Wartung und andere Eingriffe betrieben werden können.

Das Dokument EP 2 256 566 A beschreibt Messsysteme in technischen Anlagen, beispielsweise zum Messen eines Füllstands. Diese Messsysteme umfassen batteriebetriebene Feldgeräte mit einer Steuereinheit und einer Funkeinheit zur Kommunikation mit Servern oder anderen Feldgeräten sowie eine Zeitmanagementeinheit.

Das Dokument US 7,321,774 B1 beschreibt ein Gerät zur Positionsbestimmung, das Hilfssensoren aufweisen kann.

### Zusammenfassung der Erfindung

Es ist Aufgabe der Erfindung, eine Systemarchitektur und ein Verfahren bereitzustellen, mittels dessen batteriebetriebene Feldgeräte möglichst energiesparend betrieben werden können. Auch soll vermieden werden, dass die lokale Zeit des Feldgeräts von einer globalen Zeit - die beispielsweise von einer Atomuhr oder von einem Server bestimmt wird - abweicht.

Diese Aufgabe wird durch den Gegenstand der unabhängigen Patentansprüche gelöst. Weiterbildungen der Erfindung ergeben sich aus den Unteransprüchen und der folgenden Bcschrcibung.

Ein batteriebetriebenes Feldgerät, insbesondere eine Füllstand-, Durchfluss-, Druck-Sensorvorrichtung oder Anzeige-Vorrichtung, weist einen Energiespeicher, auf. Dieser kann als Batterie, als Akkumulator (Akku), als Brennstoffzelle oder als eine ähnliche Vorrichtung ausgeführt sein.

Weiterhin weist das Feldgerät eine Steuereinheit auf, die mit dem Energiespeicher über eine erste Leitung verbunden ist. Daher wird die Steuereinheit kontinuierlich mit Strom versorgt, d.h. zumindest solange der Energiespeicher funktionsfähig ist.

Ferner weist das Feldgerät einen Verbraucher auf, der über einen steuerbaren Schalter mit dem Energiespeicher verbunden ist. Dabei ist die Steuereinheit eingerichtet, den steuerbaren Schalter ein- und auszuschalten. Die Steuereinheit wirkt dabei über eine Steuerleitung auf den steuerbaren Schalter.

Durch diese Anordnung lassen sich alle Verbraucher komplett stromlos schalten. Durch diese Systemarchitektur des Feldgeräts ist es nicht mehr erforderlich, dass das gesamte Feldgerät ununterbrochen eingeschaltet ist, sondern Teile des Feldgeräts, insbesondere sämtliche Teile außer der Steuereinheit, können ausgeschaltet sein, wenn keine Messung - oder eine andere Inbetriebnahme der Kernfunktion des Feldgeräts, z.B. Anzeige oder Übermittlung von Daten - stattfindet. Durch diese Systemarchitektur kann der Energieverbrauch von batteriebetriebenen Feldgeräten deutlich reduziert werden und damit die Lebensdauer der Batterie - und folglich auch der Wartungsaufwand für dieses Feldgerät - deutlich verlängert werden.

In einer Ausführungsform ist der steuerbare Schalter ein Halbleiterschalter, z.B. ein MOSFET. Dadurch werden mechanische Teile vermieden und damit die Zuverlässigkeit des Systems verbessert und der Wartungsaufwand weiter reduziert werden. Der MOSFET kann in einer Ausführungsform als selbstsperrender MOSFET realisiert sein. Dies gewährleistet, zumindest bei einigen dieser MOSFETs, einen geringen Ruhestrom.

In einer Ausführungsform weist der Verbraucher ein Messfrontend und/oder ein Anzeigefrontend auf. Das Feldgerät kann also mindestens zwei Typen von Frontends aufweisen, die nicht ununterbrochen betrieben werden, sondern erst, wenn sie über den Schalter mit dem Energiespeicher verbunden sind, d.h. eingeschaltet sind. Dabei ist das Messfrontend eingerichtet, einen Messwert, welcher einen Füllstand, einen Durchfluss oder einen Druck umfasst, zu messen. Das Anzeigefrontend ist eingerichtet, den Messwert anzuzeigen. Bei einer Anzeige-Vorrichtung können Teile des Feldgeräts ausgeschaltet sein, wenn keine Anzeige stattfindet. Bei einigen Ausführungsformen einer Anzeige-Vorrichtung können Teile des Feldgeräts ausgeschaltet sein, solange die Anzeige sich nicht verändert. Beispiele derartiger Ausführungs-formen beinhalten Anzeige-Vorrichtungen, die sogenanntes elektronisches Papier (E-Papier oder ePaper) verwenden. In einer Ausführungsform sind das Messfrontend und das Anzeigefrontend in demselben Feldgerät angeordnet. In einer Ausführungsform weist das Feldgerät nur das Messfrontend und kein Anzeigefrontend auf. In einer Ausführungsform weist das Feldgerät nur das Anzeigefrontend und kein Messfrontend auf.

In einer Ausführungsform weist das Feldgerät weiterhin eine Rechen- und Steuereinheit, beispielsweise in Form eines Prozessors, auf, die zur Verarbeitung des Messwerts von dem Messfrontend und/oder zum Aufbereiten des Messwerts, z.B. für das Anzeigefrontend, eingerichtet ist. Die Rechen- und Steuereinheit ermöglicht z.B. eine Vorverarbeitung und/oder eine Verschlüsselung der Messdaten und trägt dazu bei, das Feldgerät flexibler und/oder für ein breiteres Anwendungsspektrum einzusetzen.

Der Verbraucher weist erfindungsgemäß eine Funkeinheit auf, welche in einer Ausführungsform eingerichtet ist, den Messwert an einen Server zu übertragen und/oder von dem Server zu empfangen. Auch die Funkeinheit ist also hinter dem Schalter angeordnet und kann daher nur dann betrieben werden, wenn der Schalter eingeschaltet ist und die Funkeinheit mit dem Energiespeicher verbunden ist. Die Funkeinheit kann zur Kommunikation mit anderen Feldgeräten oder mit einem Server genutzt werden. Die Funkeinheit kann beispielsweise Messdaten oder andere Daten von einem oder mehreren anderen Feldgeräten empfangen, z.B. um diese Daten mittels des Anzeigefrontends auf einem Display des Geräts anzuzeigen. Die Funkeinheit kann auch verwendet werden, um Daten - z.B. Messwerte - an ein anderes Feldgerät oder einen Server senden. Der Server kann sich in einer Cloud befinden.

In einer Ausführungsform weist das Feldgerät weiterhin eine Konsole auf, die entweder über eine weitere Leitung mit dem Energiespeicher verbunden ist oder einen eigenen Energiespeicher aufweist. Dabei ist die Konsole eingerichtet, den steuerbaren Schalter ein- und auszuschalten.

Die Konsole kann ein Gerät sein, das an das Feldgerät angesteckt werden kann und das beispielsweise ein Servicetechniker für die Wartung an das Feldgerät anschließt. Dies kann insbesondere zum Update von Software genutzt werden. Die Konsole kann auch für eine Verbindung mit dem Energiespeicher eingerichtet sein. Die Konsole kann eine Stromversorgung beinhalten, die geeignet ist, einen wiederaufladbaren Energiespeicher des Feldgeräts aufzuladen. Die Konsole kann eine drahtlose Verbindung sein, z.B. eine Bluetooth- und/oder NFC-Schnittstelle. Die Konsole kann induktiv mit dem Feldgerät verbunden sein. In einer Ausführungsform ist die Konsole eingerichtet, den steuerbaren Schalter mittels der Steuereinheit ein- und auszuschalten. Dies kann insbesondere von einer "intelligenten" Konsole, d.h. einer Konsole mit eigenständiger Logik - z.B. von einem Smartphone -, genutzt werden. In einer Ausführungsform weist das Feldgerät weiterhin eine Energieregeleinheit auf, die eingerichtet ist, den über den steuerbaren Schalter verbundenen Verbraucher mit geregeltem Strom zu versorgen und, bei mehr als einem Verbraucher, die Verbraucher entweder alle über den steuerbaren Schalter verbundenen Verbraucher zusammen oder selektiv ein- und auszuschalten. Dabei kann eine Priorisierung und/oder eine situationsabhängige Einschaltung der Verbraucher vorgenommen werden. Die Energieregeleinheit kann darüber hinaus so ausgelegt sein, dass sie eine gleichmäßige Spannung für den oder die Verbraucher gewährleistet, auch wenn der Energiespeicher an Ladung bzw. an Spannung verloren hat.

In einer weiteren Ausführungsform werden nach Einschalten des Schalters 250 die Komponenten 410, 450 und 350 mit Strom versorgt. Die Komponenten 410 und 350 werden jedoch zunächst von 450 in einem Sleep-Modus gehalten. Danach werden entweder 410 oder 350 eingeschaltet. Von den Komponenten 410, 450 und 350 sind also immer nur zwei eingeschaltet, und die jeweils dritte befindet sich in dem Sleep-Modus. Damit wird verhindert, dass der Batterie in bestimmten Situationen zu viel Strom entnommen wird. Dadurch ergeben sich Vorteile bei der Dimensionierung der Schaltung und insbesondere hinsichtlich einer Zulassung als Gerät für explosionsgefährdete Bereiche.

Die Steuereinheit des Feldgeräts beinhaltet erfindungsgemäß eine Zeitmanagementeinheit, welche eingerichtet ist, den Schalter, mittels einer Zeitinformation, von der Funkeinheit und/oder von der Konsole, zu steuern. Dabei kann die Zeitinformation eine absolute Zeit oder ein Zeitpunkt (z.B. "11:07"), eine relative Zeit oder eine Zeitdifferenz (z.B. "in 4 Stunden"), eine Kombination und/oder eine Wiederholung der absoluten oder relativen Zeit sein.

Die Funkeinheit des Feldgeräts ist weiterhin eingerichtet, die Zeitinformation und/oder den Messwert an ein anderes Feldgerät und/oder an den Server zu senden und/oder von dem anderen Feldgerät und/oder von dem Server zu empfangen. Dies ermöglicht eine sehr hohe Flexibilität des Mess- und/oder Anzeigegeräts und kann die Basis schaffen für weitere Optimierungen des Energieverbrauchs eines Feldgeräts.

Erfindungsgemäß wird die Zeitinformation, insbesondere die absolute Zeit oder die relative Zeit, zur zeitlichen Synchronisation des Feldgeräts verwendet. Es kann nämlich sein, dass die lokale Zeit des Feldgeräts von einer globalen Zeit - die beispielsweise von einer Atomuhr oder von einem Server bestimmt wird - abweicht. Dies kann beispielsweise der Fall sein, wenn als Taktgeber für die lokale Zeit ein Quarz benutzt wird, der z.B. Temperaturschwankungen unterliegt, welche zu einer Änderung der Resonanzfrequenz des Quarzes führen können. Dann kann z.B. die lokale Zeit des Feldgeräts mit einer absoluten Zeit (z.B. mit der globalen Zeit von dem Server) überschrieben werden. Für die Synchronisation kann auch eine relative Zeit an das Feldgerät übertragen werden, mittels derer die lokale Zeit des Feldgeräts korrigiert wird. Dies kann geschehen, z.B. um Laufzeiten der Signale zwischen Feldgerät und Server (z.B. das Roundup-Delay) zu berücksichtigen.

Die Erfindung umfasst auch eine Verwendung eines oben beschriebenen batteriebetriebenen Feldgeräts zur Messung und/oder zur Anzeige des Füllstands, Drucks oder Durchflusses von Flüssigkeiten oder von Schüttgut.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

**Fig. 1** zeigt schematisch ein Beispiel eines batteriebetriebenen Feldgeräts;
**Fig. 2** zeigt schematisch eine Ausführungsform eines batteriebetriebenen Feldgeräts;
**Fig. 3** zeigt schematisch eine erste Beispielkonstellation eines batteriebetriebenen Feldgeräts;
**Fig. 4** zeigt ein erstes Zeitdiagramm des Betriebs eines batteriebetriebenen Feldgeräts;
**Fig. 5** zeigt schematisch eine zweite Beispielkonstellation eines batteriebetriebenen Feldgeräts;
**Fig. 6** zeigt ein zweites Zeitdiagramm des Betriebs eines batteriebetriebenen Feldgeräts;
**Fig. 7** zeigt schematisch eine dritte Beispielkonstellation eines batteriebetriebenen Feldgeräts;
**Fig. 8** zeigt schematisch eine vierte Beispielkonstellation eines batteriebetriebenen Feldgeräts;
**Fig. 9** zeigt schematisch eine fünfte Beispielkonstellation eines batteriebetriebenen Feldgeräts;
**Fig. 10** zeigt ein drittes Zeitdiagramm des Betriebs eines batteriebetriebenen Feldgeräts;

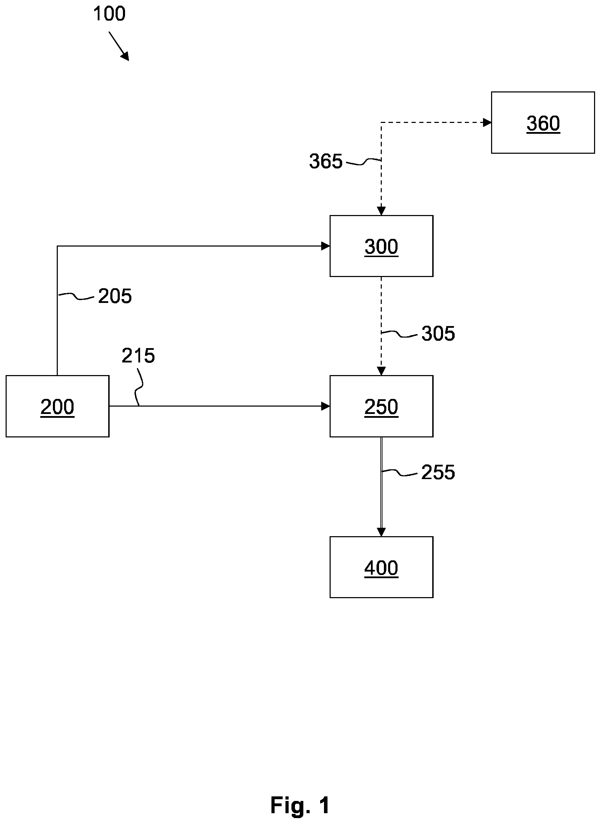

Das Feldgerät 100 von **Fig. 1** weist einen Energiespeicher 200 auf. Dieser kann als Batterie, als Akkumulator (Akku), als Brennstoffzelle oder als eine ähnliche Vorrichtung ausgeführt sein. Der Energiespeicher 200 ist über eine erste Leitung 205 mit einer Steuereinheit 300 verbunden. Die Steuereinheit 300 kann eine Zeitmanagementeinheit 301 beinhalten. Die Steuereinheit 300 wird also von dem Energiespeicher 200 kontinuierlich mit Strom versorgt, zumindest solange der Energiespeicher 200 funktionsfähig ist, d.h. z.B. mehr als eine bestimmte Spannung aufweist. Die Steuereinheit 300 steuert, über die Steuerleitung oder das Interface 305 einen steuerbaren Schalter 250. Der steuerbare Schalter 250 ist über die Leitung 215 mit dem Energiespeicher 200 verbunden und über die Leitung 255 mit einem Verbraucher 400 verbunden. Der steuerbare Schalter 250 kann also die Stromversorgung des Verbrauchers 400 vollständig abschalten. Der Verbraucher 400 kann beispielsweise ein Messfrontend 410 und/oder ein Anzeigefrontend 420 und/oder ein anderes Gerät sein. Durch die gezeigte Anordnung lassen sich also alle Verbraucher 400, die hinter dem Schalter 250 ("hinter": von dem Energiespeicher 200 aus gesehen) angeordnet sind, komplett stromlos schalten. Weil nur die Steuereinheit 300 immer mit dem Energiespeicher 200 verbunden ist, kann durch diese Systemarchitektur des Feldgeräts der Energieverbrauch deutlich reduziert und damit die Lebensdauer des Energiespeichers 200 deutlich erhöht werden. In Ausführungsformen, bei denen beispielsweise ein Messfrontend 410 die Einheit mit dem höchsten Energieverbrauch ist, wird durch dieses Abschalten der Kernfunktion des Feldgeräts der Energieverbrauch deutlich reduziert. Die **Fig. 1** weist als weitere Komponente eine Konsole 360 auf, die über das Interface 365 mit der Steuereinheit 300 verbunden ist. Die Konsole 360 kann über das Interface 365 Informationen mit der Steuereinheit 300 austauschen.

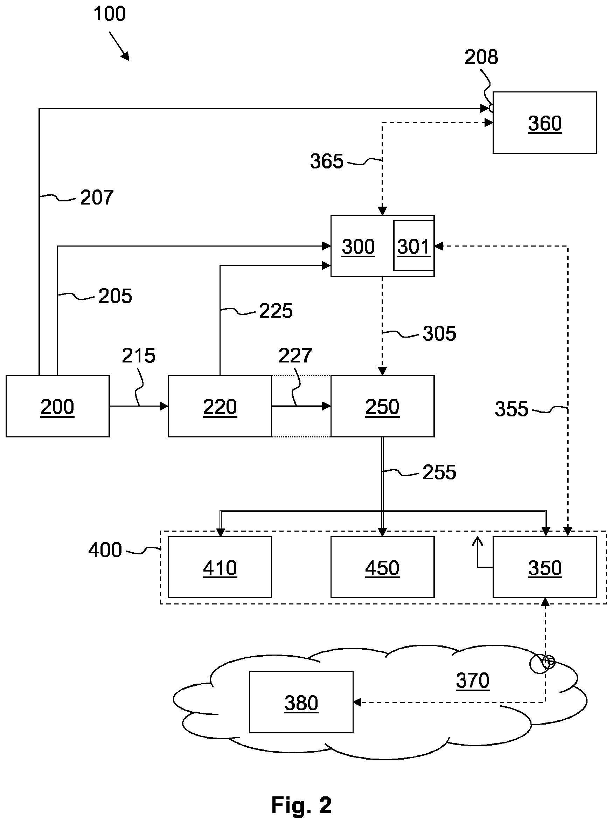

Fig. 2 zeigt eine erfindungsgemäße Ausführungsform des Feldgeräts 100, welche die Komponenten der Fig. 1 aufweist, nämlich einen Energiespeicher 200, eine Steuereinheit 300 und einen Schalter 250, der durch die Steuereinheit 300 ein- und ausgeschaltet werden kann und damit die Stromversorgung der Verbraucher 400 steuert. Als Verbraucher 400 sind ein Messfrontend 410, eine Recheneinheit 450 und eine Funkeinheit 350, über die gesteuerte Leitung 255, angeschlossen. In einer Ausführungsform kann der Schalter 250 eingerichtet sein, die gezeigten Verbraucher 400 entweder zusammen oder selektiv ein- und auszuschalten. Der Schalter 250 ist über eine Leitung 227 mit einer Energieregeleinheit 220 verbunden. Die Energieregeleinheit 220 hat die Aufgabe, die Spannung der Verbraucher 400 auch bei schwankender Belastung und/oder bei reduzierter Spannung des Energiespeichers 200 konstant zu halten. Die Energieregeleinheit 220 ist über die Leitung 225 mit einem zweiten Eingang der Steuereinheit 300 verbunden, so dass die Spannung auch der Energieregeleinheit 220 konstant gehalten werden kann. In einer Ausführungsform ist auch die die Leitung 225 durch den Schalter 250 ein- und ausschaltbar hier nicht gezeigt.

Die gezeigte Ausführungsform weist auch eine Konsole 360 auf, die über die Leitung 207 und einen Anschluss 208 mit dem Energiespeicher 200 verbunden ist. Der Anschluss 208 kann als Stecker implementiert sein und in einer Ausführungsform auch zum Anschluss des Interfaces 365 dienen. Die Konsole 360 kann einen eigenen Energiespeicher aufweisen in Fig. 2 nicht gezeigt, der so eingerichtet sein kann, dass damit der Energiespeicher 200 des Feldgeräts 100 - wenn der Energiespeicher 200 aufladbar gestaltet ist - geladen werden kann.

Ferner weist das Feldgerät 100 - als einer der Verbraucher 400 - eine Funkeinheit 350 auf, die mit dem Energiespeicher 200 über einen Schalter 250 verbunden ist, welcher zwischen den Leitungen 215 und 255 angeordnet ist. Die Funkeinheit 350 ist eingerichtet, Informationen zu senden und zu empfangen. Die Funkeinheit 350 kann nur dann betrieben werden, wenn der Schalter 250 eingeschaltet ist und so die Funkeinheit 350 mit dem Energiespeicher 200 verbunden ist. Die Funkeinheit 350 ist auch geeignet, eine Zeitinformation über die nächste Messung über ein erstes Interface 355 an die Zeitmanagementeinheit 301 zu übertragen und/oder von der zu Zeitmanagementeinheit 301 zu empfangen, wenn der Schalter 250 eingeschaltet ist. Die Zeitinformation kann eine absolute Zeit, eine relative Zeit und/oder eine Kombination oder Wiederholung der absoluten oder relativen Zeit sein. Die Funkeinheit 350 kann mit einem Server 380 kommunizieren, der sich in einer Cloud 370 befindet. Dabei können beispielsweise Messwerte oder auch Zeitinformationen ausgetauscht werden. Die Funkeinheit 350 kann auch - mittels der Zeitmanagementeinheit 301, welche Teil der Steuereinheit 300 ist - mittels einer Zeitinformation die Steuereinheit 300 steuern.

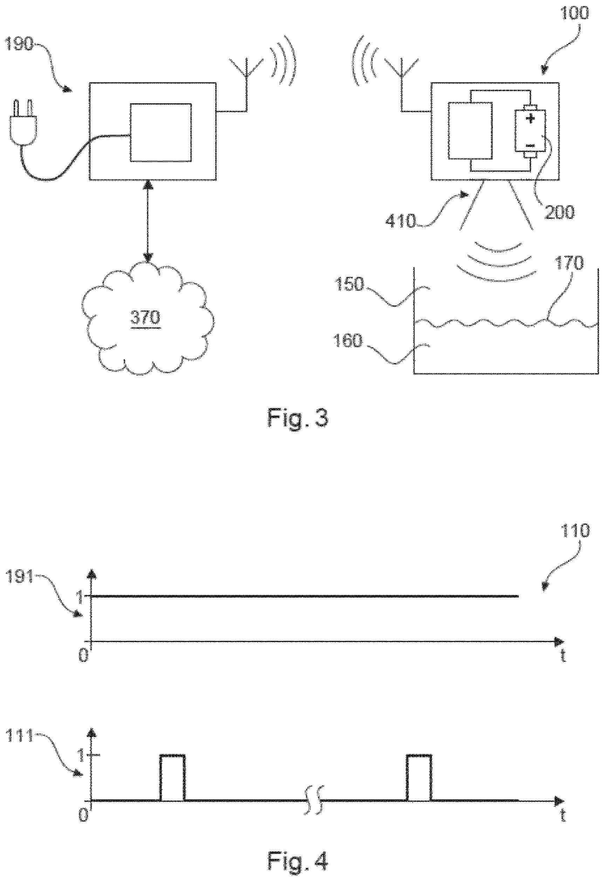

**Fig. 3** zeigt schematisch eine erste Beispielkonstellation eines batteriebetriebenen Feldgeräts 100 (rechte Seite) mit einem Energiespeicher 200. Dabei misst das Feldgerät 100, mittels des Messfrontends 410, einen Füllstand 170 eines Füllguts 160 in einem Behälter 150. Das Feldgerät 100 ist drahtlos mit einem netzbetriebenen Gerät 190 (linke Seite), z.B. einer Basisstation, verbunden. Das Gerät 190 ist mit einer Cloud 370 verbunden. Das Gerät 190 kann das Signal eines LPWAN-Gerätes, wie z.B. das des dargestellten Feldgeräts 100, empfangen und z.B. die Messwerte in die Cloud 370 übertragen.

**Fig. 4** zeigt ein erstes Zeitdiagramm 110 des Betriebs eines batteriebetriebenen Feldgeräts 100 (Teildiagramm 111) in Kombination mit einem netzbetriebenen Gerät 190 (Teildiagramm 191). Dies entspricht einem Szenario, wie es z.B. in der Beispielkonstellation von **Fig. 3** dargestellt ist. Es ist in Teildiagramm 191 deutlich sichtbar, dass das netzbetriebene Gerät 190 immer sende- und empfangsbereit ist, während in Teildiagramm 111 das Feldgerät 100 aus Energiespargründen nur in kurzen Zeitabschnitten sende- und empfangsbereit ist.

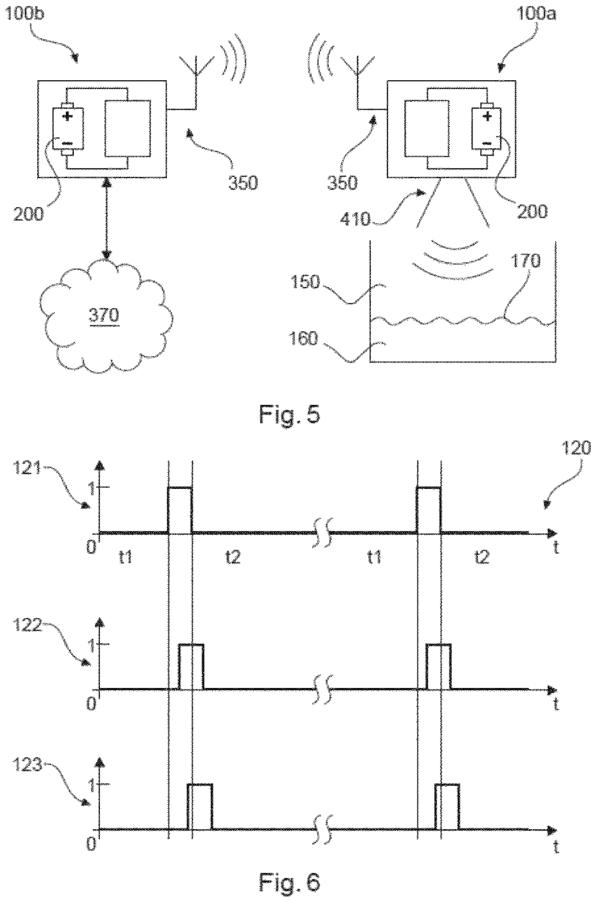

**Fig. 5** zeigt schematisch eine zweite Beispielkonstellation eines batteriebetriebenen Feldgeräts 100a (rechte Seite) mit einem Energiespeicher 200 und einem Messfrontend 410. Das Feldgerät 100a kommuniziert mit einem anderen Feldgerät 100b (linke Seite), das als Repeater gestaltet sein kann. Dies kann beispielsweise in Bereichen eingesetzt werden, in denen kein Stromnetz zur Verfügung steht. Das batteriebetriebene Feldgerät 100b ist dabei eingerichtet, Messdaten von dem Messfrontend 410 des Feldgeräts 100a zu empfangen, ggf. zu sammeln und - z.B. über einen Funkmast - in eine Cloud 370 zu senden.

**Fig. 6** zeigt ein zweites Zeitdiagramm 120 des Betriebs eines batteriebetriebenen Feldgeräts 100a mit einem weiteren batteriebetriebenen Feldgerät 100b, wie es z.B. in der Beispielkonstellation von **Fig. 5** dargestellt ist. In Teildiagramm 121 sind wieder die Sendezeiten des Feldgeräts 100a gezeigt; das Feldgerät 100 sendet dabei zwischen der Zeit t1 und der Zeit t2. Das weitere batteriebetriebene Feldgerät 100b kann dabei z.B. das Zeitdiagramm 122 oder 123 aufweisen. Während bei Zeitdiagramm 122 die Messdaten - z.B. bei entsprechender Sicherung mit redundanten Informationen - noch mit einer gewissen Wahrscheinlichkeit bzw. mit ausreichender Qualität übertragen werden können, gelingt dies bei Zeitdiagramm 123 nicht mehr. Grund dafür können differierende lokale Zeiten in den verschiedenen Feldgeräten 100a und 100b sein. Diesem Effekt kann mit einer Synchronisation der lokalen Zeiten wie oben beschrieben entgegengewirkt werden.

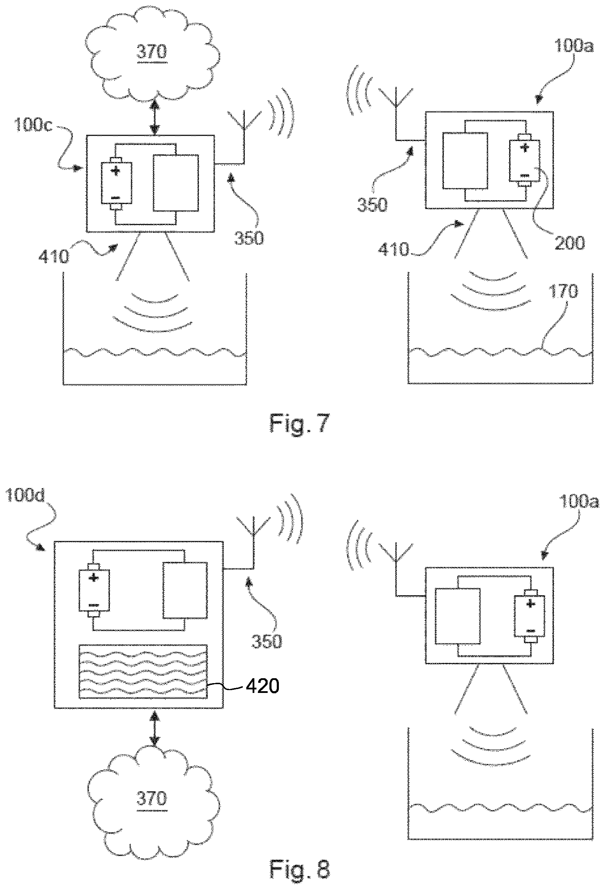

**Fig. 7** zeigt schematisch eine dritte Beispielkonstellation eines batteriebetriebenen Feldgeräts 100. Dabei entspricht das jeweils rechts dargestellte Feldgerät 100a von **Fig. 7, 8** und **9** dem jeweils rechts dargestellten Feldgerät 100a von **Fig. 3** und **5****.** Das links dargestellte Feldgerät 100c weist dabei ein Messfrontend 410 und gleichzeitig eine Funkeinheit 350 auf, mittels derer es z.B. mit einer Cloud 370 kommunizieren kann.

**Fig. 8** zeigt schematisch eine vierte Beispielkonstellation eines batteriebetriebenen Feldgeräts 100. Das links dargestellte Feldgerät 100d weist dabei ein Anzeigefrontend 420 und gleichzeitig eine Funkeinheit 350 auf, mittels derer es z.B. mit einer Cloud 370 kommunizieren kann.

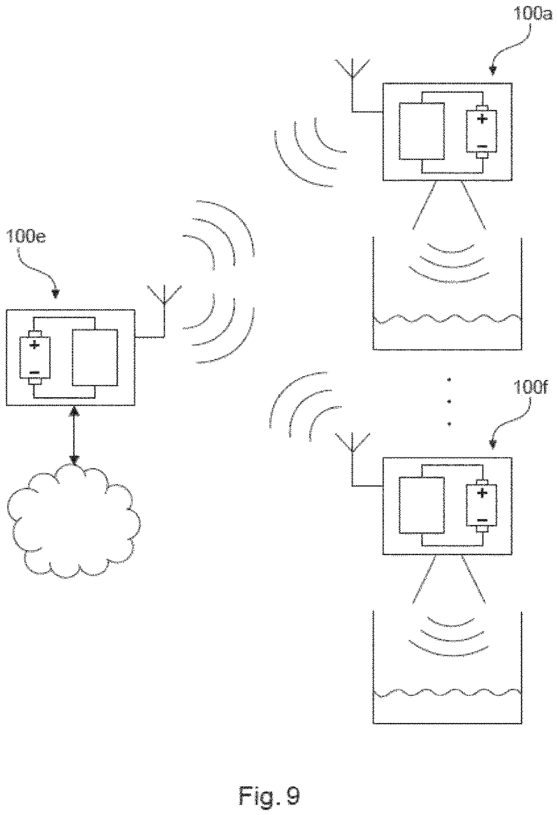

**Fig. 9** zeigt schematisch eine fünfte Beispielkonstellation eines batteriebetriebenen Feldgeräts 100. Dabei ist dargestellt, dass mehrere Feldgeräte 100e, 100f mit Sensoren mit einem Feldgerät 100a kommunizieren können. Ebenfalls denkbar ist eine Kettenschaltung der Feldgeräte.

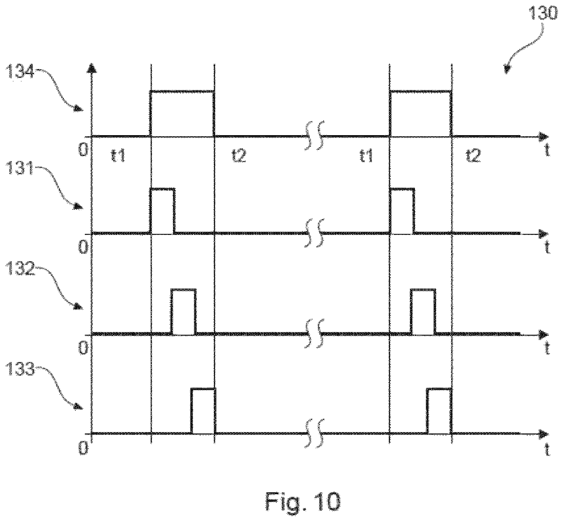

**Fig. 10** zeigt ein drittes Zeitdiagramm 130 des Betriebs eines batteriebetriebenen Feldgeräts 100. Damit mehrere Feldgeräte, mit Teildiagrammen 131, 132, 133, mit einem zentralen Feldgerät 100 kommunizieren können, muss dessen Teildiagramm 134 so gestaltet sein, dass dessen Betriebszeit - dargestellt zwischen den Zeiten t1 und t2 - zum einen mit den Betriebszeiten der anderen Feldgeräte (Teildiagramme 131, 132, 133) überlappt und zum andern den Teildiagrammen der anderen Feldgeräten jeweils ein eindeutig definierter Zeitbereich zugewiesen ist.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

100, 100a, 100b, 100c, 100d, 100e, 100f batteriebetriebenes Feldgerät
110, 120, 130 Zeitdiagramme
111, 121 .. 123, 131 .. 134, 191 Teildiagramme
150 Behälter
160 Füllguts
170 Füllstand
190 netzbetriebenes Gerät
200 Energiespeicher
205, 207, 215 Leitungen
208 Anschluss
220 Energieregeleinheit
225, 227, 255 Leitung
250 Schalter
300 Steuereinheit
301 Zeitmanagementeinheit
305 Steuerleitung
350 Funkeinheit
355 erstes Interface
360 Konsole
365 zweites Interface
370 Cloud
380 Server
400 Verbraucher
410 Sensor, Messfrontend
420 Anzeigefrontend
450 Rechen- und Steuereinheit

## Patentansprüche

1. Batteriebetriebenes Feldgerät (100), insbesondere Füllstand-, Durchfluss-, Druck-Sensorvorrichtung oder Anzeige-Vorrichtung, aufweisend:
einen Energiespeicher (200),
eine Steuereinheit (300), die mit dem Energiespeicher (200) über eine erste Leitung (205) verbunden ist, und
einen Verbraucher (400), der über einen steuerbaren Schalter (250) mit dem Energiespeicher (200) verbunden ist,
wobei der Verbraucher (400) eine Funkeinheit (350) aufweist,
wobei die Steuereinheit (300) eingerichtet ist, den steuerbaren Schalter (250) ein- und auszuschalten,
wobei die Steuereinheit (300) eine Zeitmanagementeinheit (301) beinhaltet, welche von dem Energiespeicher (200) kontinuierlich mit Strom versorgt wird und die dazu eingerichtet ist, den Schalter (250), mittels einer Zeitinformation, von der Funkeinheit (350), zu steuern, wobei die Zeitinformation ein Zeitpunkt, eine Zeitspanne und/oder ein Zeitraster ist,
wobei die die Funkeinheit (350) des Feldgeräts (100) dazu eingerichtet ist, die Zeitinformation von einem anderen Feldgerät (100) und/oder von einem Server (380) zu empfangen,
wobei die Zeitinformation zur zeitlichen Synchronisation einer globalen Zeit des Feldgeräts (100) mit der Zeitinformation von dem anderen Feldgerät (100) und/oder von dem Server (380) verwendet wird.

2. Feldgerät (100) nach Anspruch 1,
wobei der steuerbare Schalter (250) ein Halbleiterschalter, insbesondere ein MOSFET ist.

3. Feldgerät (100) nach Anspruch 1 oder 2,
wobei der Verbraucher (400) ein Messfrontend (410) und/oder ein Anzeigefrontend (420) aufweist, und
wobei das Messfrontend (410) eingerichtet ist, einen Messwert, welcher einen Füllstand, einen Durchfluss oder einen Druck umfasst, zu messen, und
das Anzeigefrontend (420) eingerichtet ist, den Messwert anzuzeigen.

4. Feldgerät (100) nach Anspruch 3,
wobei der Verbraucher (400) weiterhin eine Rechen- und Steuereinheit (450) aufweist, die zum Empfangen und zur Verarbeitung des Messwerts von dem Messfrontend (410) und/oder zum Aufbereiten und Senden des Messwerts an das Anzeigefrontend (420) eingerichtet ist.

5. Feldgerät (100) nach einem der vorangehenden Ansprüche,
wobei die Funkeinheit (350) weiterhin eingerichtet ist, den Messwert an den Server (380) zu übertragen und/oder von dem Server (380) zu empfangen.

6. Feldgerät (100) nach einem der vorangehenden Ansprüche, weiterhin aufweisend:
eine Konsole (360), die entweder über eine weitere Leitung (207) mit dem Energiespeicher (200) verbunden ist oder einen eigenen Energiespeicher aufweist,
wobei die Konsole (360) eingerichtet ist, den steuerbaren Schalter (250) ein- und auszuschalten.

7. Feldgerät (100) nach Anspruch 6,
wobei die Konsole (360) eingerichtet ist, den steuerbaren Schalter (250) mittels der Steuereinheit (300) ein- und auszuschalten.

8. Feldgerät (100) nach einem der vorangehenden Ansprüche, weiterhin aufweisend:
eine Energieregeleinheit (220), die eingerichtet ist, den über den steuerbaren Schalter (250) verbundenen Verbraucher (400) mit geregeltem Strom zu versorgen und, bei mehr als einem Verbraucher (400), die Verbraucher (400) entweder zusammen oder selektiv ein- und auszuschalten.

9. Feldgerät (100) nach Anspruch 8,
wobei die Energieregeleinheit (220) eingerichtet ist, nur jeweils maximal zwei der Verbraucher (400) mit Strom zu versorgen.

10. Feldgerät (100) nach Anspruch 5 bis 7,
wobei die Zeitmanagementeinheit (301) weiterhin eingerichtet ist, den Schalter (250), mittels einer Zeitinformation, von der Konsole (360) zu steuern.

11. Feldgerät (100) nach Anspruch 10,
wobei die Funkeinheit (350) weiterhin eingerichtet ist,
die Zeitinformation und/oder den Messwert an ein anderes Feldgerät (100)
und/oder an den Server (380) zu senden.

12. Verwendung eines batteriebetriebenen Feldgeräts (100) nach einem der vorhergehenden Ansprüche zur Messung und/oder zur Anzeige des Füllstands, Drucks oder Durchflusses von Flüssigkeiten oder von Schüttgut.

## Claims

1. A battery-operated field device (100), particularly a level, flow, pressure sensor device or display device, comprising:
an energy storage device (200),
a control unit (300) which is connected to the energy store (200) via a first line (205), and
a consumer device (400) connected to the energy storage device (200) via a controllable switch (250),
the consumer device (400) comprising a radio unit (350),
wherein the control unit (300) is configured to switch the controllable switch (250) on and off,
wherein the control unit (300) includes a time management unit (301) which is continuously supplied with power from the energy storage (200) and which is configured to control the switch (250) by means of time information from the radio unit (350), wherein the time information is a time, a time period and/or a time grid,
wherein the radio unit (350) of the field device (100) is arranged to receive the time information from another field device (100) and/or from a server (380),
wherein the time information is used for time synchronisation of a global time of the field device (100) with the time information from the other field device (100) and/or from the server (380).

2. The field device (100) according to claim 1,
wherein the controllable switch (250) is a semiconductor switch, in particular a MOSFET.

3. Field device (100) according to claim 1 or 2,
wherein the consumer device (400) comprises a measurement front end (410) and/or a display front end (420), and
wherein the measurement front end (410) is configured to measure a measurement value comprising a level, a flow or a pressure, and
the display front end (420) is arranged to display the measured value.

4. The field device (100) of claim 3,
wherein the consumer (400) further comprises a computing and control unit (450) configured to receive and process the measured value from the measuring front end (410) and/or to process and transmit the measured value to the display front end (420).

5. The field device (100) according to any one of the preceding claims,
wherein the radio unit (350) is further configured to transmit the measured value to the server (380) and/or to receive it from the server (380).

6. The field device (100) according to any one of the preceding claims, further comprising:
a console (360) that is either connected to the energy storage device (200) via a further line (207) or comprises its own energy storage device,
wherein the console (360) is arranged to switch the controllable switch (250) on and off.

7. The field device (100) according to claim 6,
wherein the console (360) is arranged to switch the controllable switch (250) on and off by means of the control unit (300).

8. The field device (100) according to any one of the preceding claims, further comprising:
a power control unit (220) arranged to supply regulated power to the consumer device (400) connected via the controllable switch (250) and, in the case of more than one consumer device (400), to switch the consumer devices (400) on and off either together or selectively.

9. The field device (100) according to claim 8,
wherein the power control unit (220) is configured to supply power only to a maximum of two of the loads (400) at a time.

10. The field device (100) according to any one of the claims 5 to 7,
wherein the time management unit (301) is further configured to control the switch (250) by means of a time information from the console (360).

11. The field device (100) of claim 10,
wherein said radio unit (350) is further adapted to transmit the time information and/or the measured value to another field device (100) and/or to the server (380).

12. Use of a battery-powered field device (100) according to any one of the preceding claims for measuring and/or displaying the level, pressure or flow of liquids or bulk material.

## Revendications

1. Appareil de terrain alimenté par batterie (100), en particulier dispositif de détection de niveau de remplissage, de débit, de pression ou dispositif d'affichage, présentant :
un accumulateur d'énergie (200),
une unité de commande (300) qui est reliée à l'accumulateur d'énergie (200) par une première ligne (205) et
un consommateur (400) qui est relié à l'accumulateur d'énergie (200) par l'intermédiaire d'un commutateur commandable (250),
dans lequel le consommateur (400) présente une unité radio (350),
dans lequel l'unité de commande (300) est conçue pour activer et désactiver le commutateur commandable (250),
dans lequel l'unité de commande (300) comprend une unité de gestion du temps (301) qui est alimentée en continu en courant par l'accumulateur d'énergie (200) et qui est conçue pour commander le commutateur (250) au moyen d'une information de temps provenant de l'unité radio (350), l'information de temps étant un instant, une période et/ou un intervalle de temps,
dans lequel l'unité radio (350) de l'appareil de terrain (100) est conçue pour recevoir l'information de temps d'un autre appareil de terrain (100) et/ou d'un serveur (380),
dans lequel l'information de temps est utilisée pour la synchronisation temporelle d'un temps global de l'appareil de terrain (100) avec l'information de temps de l'autre appareil de terrain (100) et/ou du serveur (380).

2. Appareil de terrain (100) selon la revendication 1,
dans lequel le commutateur commandable (250) est un commutateur à semi-conducteurs, en particulier un MOSFET.

3. Appareil de terrain (100) selon la revendication 1 ou 2,
dans lequel le consommateur (400) présente un frontal de mesure (410) et/ou un frontal d'affichage (420), et
dans lequel le frontal de mesure (410) est conçu pour mesurer une valeur de mesure comprenant un niveau de remplissage, un débit ou une pression, et
le frontal d'affichage (420) est conçu pour afficher la valeur de mesure.

4. Appareil de terrain (100) selon la revendication 3,
dans lequel le consommateur (400) présente en outre une unité de calcul et de commande (450) qui est conçue pour recevoir et traiter la valeur de mesure provenant du frontal de mesure (410) et/ou pour mettre en forme et envoyer la valeur de mesure au frontal d'affichage (420).

5. Appareil de terrain (100) selon l'une des revendications précédentes,
dans lequel l'unité radio (350) est en outre conçue pour transmettre la valeur de mesure au serveur (380) et/ou pour la recevoir du serveur (380).

6. Appareil de terrain (100) selon l'une des revendications précédentes, présentant en outre :
une console (360) qui est soit reliée à l'accumulateur d'énergie (200) par une autre ligne (207), soit qui présente son propre accumulateur d'énergie,
dans lequel la console (360) est conçue pour activer et désactiver le commutateur commandable (250).

7. Appareil de terrain (100) selon la revendication 6,
dans lequel la console (360) est conçue pour activer et désactiver le commutateur commandable (250) au moyen de l'unité de commande (300).

8. Appareil de terrain (100) selon l'une des revendications précédentes, présentant en outre :
une unité de régulation d'énergie (220) qui est conçue pour alimenter en courant régulé le consommateur (400) relié par l'intermédiaire du commutateur commandable (250) et, dans le cas de plus d'un consommateur (400), pour activer et désactiver les consommateurs (400) soit ensemble, soit de manière sélective.

9. Appareil de terrain (100) selon la revendication 8,
dans lequel l'unité de régulation d'énergie (220) est conçue pour n'alimenter en courant que deux des consommateurs (400) à la fois au maximum.

10. Appareil de terrain (100) selon les revendications 5 à 7, dans lequel l'unité de gestion du temps (301) est en outre conçue pour commander le commutateur (250) au moyen d'une information de temps provenant de la console (360).

11. Appareil de terrain (100) selon la revendication 10,
dans lequel l'unité radio (350) est en outre conçue pour envoyer l'information de temps et/ou la valeur de mesure à un autre appareil de terrain (100) et/ou au serveur (380).

12. Utilisation d'un appareil de terrain alimenté par batterie (100) selon l'une des revendications précédentes pour la mesure et/ou l'affichage du niveau de remplissage, de la pression ou du débit de liquides ou de produits en vrac.
